# EUROPÄISCHE PATENTSCHRIFT

(11) **EP 1 449 727 B1**
(45) Veröffentlichungstag und Bekanntmachung des Hinweises auf die Patenterteilung: **28.04.2010**
(21) Anmeldenummer: 04001439.1
(22) Anmeldetag: 23.01.2004
(51) Int. Cl.: B60S 1/08, B60S 1/58

(54) **Vorrichtung und Verfahren zur Steuerung einer Wischanlage eines Kraftfahrzeugs**
Apparatus and method for controlling a wiper arrangement of a motor vehicle
Dispositif et procédé de contrôle d'un dispositif d'essuyage d'un véhicule

(30) Priorität: 24.02.2003 DE 10307961
(43) Veröffentlichungstag der Anmeldung: 25.08.2004
(73) Patentinhaber: Volkswagen Aktiengesellschaft, 38436 Wolfsburg (DE)
(72) Erfinder: Kulinna, Hans-Jürgen, 29392 Wesendorf (DE); Hanisch, Friedrich, 38536 Seershausen (DE); Schwab, Gabriel, 38440 Wolfsburg (DE)
(74) Vertreter: Rabe, Andreas

(56) Entgegenhaltungen:
- EP-A- 0 786 385
- DE-A1- 3 407 974
- DE-A1- 19 644 553
- FR-A- 2 622 853
- PATENT ABSTRACTS OF JAPAN Bd. 1995, Nr. 08, 29. September 1995 (1995-09-29) -& JP 07 117634 A (TOYOTA MOTOR CORP; others: 02), 9. Mai 1995 (1995-05-09)
- PATENT ABSTRACTS OF JAPAN Bd. 016, Nr. 399 (M-1300), 24. August 1992 (1992-08-24) & JP 04 133842 A (JIDOSHA DENKI KOGYO CO LTD), 7. Mai 1992 (1992-05-07)

## Beschreibung

Die vorliegende Erfindung betrifft eine Vorrichtung und ein Verfahren zur Steuerung einer Wischanlage eines Kraftfahrzeugs gemäß dem Oberbegriff des Anspruchs 1 bzw. des Anspruchs 12.

Aus dem Stand der Technik sind bereits verschiedene Systeme bekannt, mit denen ein Heckscheibenwischer eines Kraftfahrzeugs in Abhängigkeit von dem Betriebszustand des Frontscheibenwischers, von dem Messsignal eines Regensensors und/oder von dem Erkennen eines Rückwärtsfahrbetriebs des Kraftfahrzeugs angesteuert wird, um für den Fahrer bei einer Rückwärtsfahrt des Kraftfahrzeugs eine klare Sicht durch die Heckscheibe zu gewährleisten und gleichzeitig einen hohen Komfort für den Fahrer bereit zu stellen.

So offenbart zum Beispiel die JP-A-04-133,842 eine Einrichtung, bei der ein Heckscheibenwischer automatisch aktiviert wird, wenn der Rückwärtsgang bei aktivem Frontscheibenwischer eingelegt wird, sodass der Fahrer zu Beginn der Rückwärtsfahrt den Heckscheibenwischer nicht selbst einschalten muss. In einer Weiterbildung dieses Systems wird gemäß der EP 0 932 533 B1 eine Steuervorrichtung vorgeschlagen, bei welcher der Heckscheibenwischer automatisch dann betätigt wird, wenn einerseits der Rückwärtsgang eingelegt wird und andererseits ein Regensensor eine Benetzung der Heckscheibe erfasst.

Ferner ist aus der DE 34 07 974 A1 eine Wischanlage für Kraftfahrzeuge bekannt, bei welcher der Heckscheibenwischer in Abhängigkeit sowohl von der Fahrtrichtung (Vorwärtsfahrt, Rückwärtsfahrt) des Kraftfahrzeugs als auch von der Wischfrequenz des Frontscheibenwischers gesteuert wird. Insbesondere wird die Wischfrequenz des Heckscheibenwischers bei Rückwärtsfahrt des Kraftfahrzeugs angehoben.

Während die oben genannten Vorrichtungen die Steuerung speziell eines Heckscheibenwischers betreffen, bezieht sich die DE 195 19 502 A1 allgemein auf eine Vorrichtung zum Betreiben eines Scheibenwischers mit einem Sensor zum Erfassen des Benetzungszustandes der Scheibe und zusätzlich mit einer Erkennungseinrichtung für einzelne Tropfen auf der Scheibe, um einen angemessenen Wischbetrieb des Scheibenwischers auch bei einzelnen Tropfen bereitzustellen. Ferner offenbart die DE 195 36 621 C2 eine regensensorabhängige Steuerung eines Scheibenwischers eines Kraftfahrzeugs. Um zu verhindern, dass ein Scheibenwischer nach Inbetriebnahme des Kraftfahrzeugs über eine trockene Scheibe wischt und dabei möglicherweise das Wischerblatt beschädigt, falls zum Beispiel der Fahrer beim Abstellen des Kraftfahrzeugs die regensensorabhängige Steuerung im eingeschalteten Zustand belassen hat, wird der Scheibenwischer nach Inbetriebnahme des Kraftfahrzeugs erst nach Betätigung irgendeiner Scheibenreinigungsfunktion, d.h. wenn der Fahrer bewusst einen Wischvorgang des Scheibenwischers betätigen will, eingeschaltet.

Die JP 07 117634 beschreibt eine Steuerung für einen Heckscheibenwischer nach dem Oberbegriff des Anspruchs 1.

Ausgehend von dem oben genannten Stand der Technik liegt der vorliegenden Erfindung die Aufgabe zugrunde, eine Wischanlage eines Kraftfahrzeugs mit einem Frontscheibenwischer und einem Heckscheibenwischer vorzusehen, bei welcher einerseits für den Fahrer im Rückwärtsfahrbetrieb des Kraftfahrzeugs durch einen angemessenen Wischbetrieb des Heckscheibenwischers immer eine freie Sicht gewährleistet ist und andererseits das Wischen des Heckscheibenwischers über eine trockene Scheibe zur Verhinderung von möglichen Beschädigungen der Wischerblätter zuverlässig vermieden wird. Insbesondere soll diese Aufgabe durch eine Wischanlage ohne eine speziellen Regensensor zur Erfassung einer Benetzung der Heckscheibe durch Regen gelöst werden.

Diese Aufgabe wird durch eine Vorrichtung bzw. ein Verfahren zur Steuerung einer Wischanlage eines Kraftfahrzeugs mit den Merkmalen des Anspruchs 1 bzw. des Anspruchs 11 gelöst. Vorteilhafte Ausgestaltungen und Weiterbildungen der Erfindung sind in den jeweiligen abhängigen Ansprüchen angegeben.

Die Wischanlage eines Kraftfahrzeugs umfasst einen Frontscheibenwischer und einen Heckscheibenwischer, eine Einrichtung zum Erfassen eines Rückwärtsfahrbetriebs des Kraftfahrzeugs sowie eine Vorrichtung zur Steuerung der Wischanlage. Diese letztgenannte Vorrichtung steuert den Heckscheibenwischer derart an, dass bei Erfassung eines Rückwärtsfahrbetriebs des Kraftfahrzeugs automatisch ein einzelner Wischzyklus des Heckscheibenwischers erfolgt, wenn einerseits grundsätzlich von einer Benetzung der Kratffahrzeugscheiben durch Regen auszugehen ist und andererseits von einer nicht mehr trockenen Heckscheibe auszugehen ist. Durch eine solche automatische Ansteuerung des Heckscheibenwischers ist sichergestellt, dass bei einem Rückwärtsfahrbetrieb des Kraftfahrzeugs die Heckscheibe für den Fahrer ohne Betätigen entsprechender Schaltelemente angemessen gereinigt wird; außerdem ist gewährleistet, dass der Heckscheibenwischer nicht über eine trockene Heckscheibe wischt und möglicher Weise die Wischerblätter beschädigt.

In einer vorteilhaften Ausgestaltung der Erfindung ist die Vorrichtung ferner mit einem ersten Timer zum Erfassen der Zeit seit dem letzten Wischzyklus des Frontscheibenwischers versehen, und eine grundsätzliche Benetzung der Kraftfahrzeugscheiben wird erkannt, wenn die Zeit seit dem letzten Wischzyklus des Frontscheibenwischers kleiner als ein erster vorgegebener Grenzwert von zum Beispiel etwa 30 Sekunden ist. Vorzugsweise wird der Zeitwert seit dem letzten Wischzyklus des Frontscheibenwischers beim Starten des Kraftfahrzeugs während eines Initialisierungsvorgangs auf Null zurück gesetzt, und der erste vorgegebene Grenzwert entspricht der Zeitdauer zwischen zwei Wischzyklen des Frontscheibenwischers in einem typischen Intervallmodus.

In einer vorteilhaften Ausgestaltung der Erfindung ist die Vorrichtung weiterhin mit einem zweiten Timer zum Erfassen der Zeit seit dem letzten Wischzyklus des Heckscheibenwischers versehen, und eine nicht mehr trockene Heckscheibe wird erkannt, wenn die Zeit seit dem letzten Wischzyklus des Heckscheibenwischers größer als ein zweiter vorgegebener Grenzwert von zum Beispiel 15 Sekunden ist. Vorzugsweise wird der Zeitwert seit dem letzten Wischzyklus des Heckscheibenwischers beim Starten des Kraftfahrzeugs während eines Initialisierungsvorgangs auf einen Wert größer als der zweite vorgegebene Grenzwert gesetzt, und der zweite vorgegebene Grenzwert ist kleiner als der erste vorgegebene Grenzwert gewählt.

Erfindungsgemäß ist der Frontscheibenwischer in einem Intervallmodus und/oder einem Regensensormodus sowie in wenigstens einem Geschwindigkeitsmodus ansteuerbar ist. Die Ansteuerung des Heckscheibenwischers zur Durchführung eines einzelnen Wischzyklus wird in der oben angegebenen Weise nur durchgeführt, wenn der Frontscheibenwischer im Intervallmodus oder im Regensensormodus betrieben wird, und die Ansteuerung des Heckscheibenwischers erfolgt in einem Intervallmodus, wenn der Frontscheibenwischer im Geschwindigkeitsmodus betrieben wird.

Ferner kann die Erfassung des Rückwärtsfahrbetriebs des Kraftfahrzeugs beispielsweise durch das Einlegen des Rückwärtsgangs des Kraftfahrzeugs durch den Fahrer erfasst werden. Alternativ ist es auch möglich, den Rückwärtsfahrbetrieb des Kraftfahrzeugs durch die Erfassung der Rückwärtsfahrt des Kraftfahrzeugs mit einer vorgegebenen Geschwindigkeit von wenigen km/h zu erfassen. Im letztgenannten Fall wird der Heckscheibenwischer erst dann betätigt, wenn der Fahrer das Fahrzeug wirklich in Rückwärtsrichtung betätigt, und eine Zeitverzögerung zwischen dem Einlegen des Rückwärtsgangs durch den Fahrer und dem Beginn der Rückwärtsfahrt bleibt unberücksichtigt.

Obige sowie weitere Merkmale und Vorteile der vorliegenden Erfindung werden anhand eines bevorzugten Ausführungsbeispiels unter Bezugnahme auf die beiliegenden Zeichnungen näher beschrieben. Darin zeigen:
- Fig. 1: ein schematisches Blockschaltbild eines bevorzugten Ausführungsbeispiels einer Vorrichtung zur Steuerung einer Wischanlage eines Kraftfahrzeugs gemäß der vorliegenden Erfindung; und
- Fig. 2: ein Flussdiagramm zur Erläuterung des Verfahrens zur Steuerung der in Fig. 1 dargestellten Wischanlage gemäß der vorliegenden Erfindung.

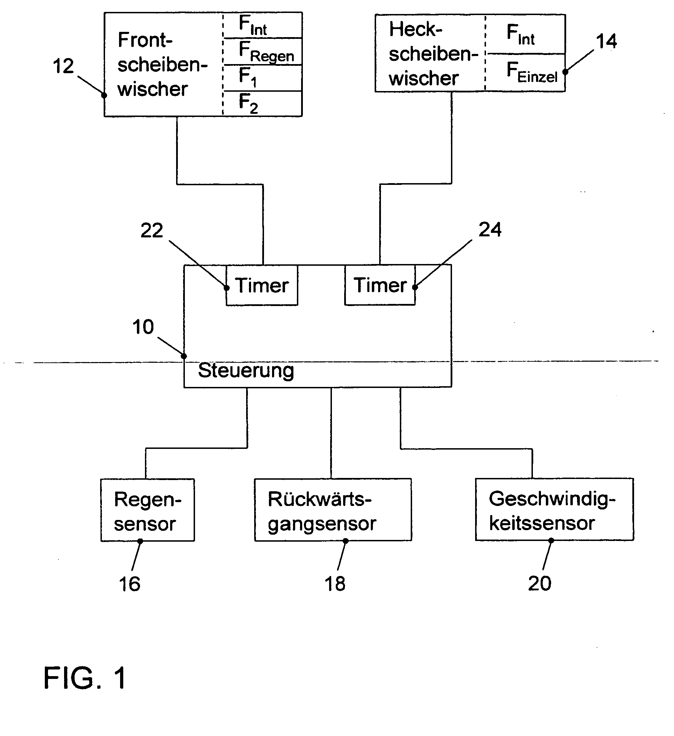

Fig. 1 zeigt zunächst in stark vereinfachter Darstellung den Aufbau eines bevorzugten Ausführungsbeispiels einer Vorrichtung zur Steuerung einer Wischanlage eines Kraftfahrzeugs gemäß der vorliegenden Erfindung. Die Vorrichtung umfasst insbesondere ein Steuergerät 10 zur Ansteuerung eines Frontscheibenwischers 12 und eines Heckscheibenwischers 14 eines Kraftfahrzeugs. Alternativ kann die Vorrichtung auch ein erstes Steuergerät zur Ansteuerung des Frontscheibenwischers und ein zweites Steuergerät zur Ansteuerung des Heckscheibenwischers enthalten, wobei das zweite Steuergerät des Heckscheibenwischers mit dem ersten Steuergerät des Frontscheibenwischers gekoppelt ist, um dem zweiten Steuergerät des Heckscheibenwischers ein Betriebszustandssignal oder dergleichen von dem zweiten Steuergerät des Frontscheibenwischers zuzuführen. Der Frontscheibenwischer ist in einem Intervallmodus F_{Int,} einem Regensensormodus F_{Regen,} einem ersten Geschwindigkeitsmodus F₁ und einem zweiten Geschwindigkeitsmodus F₂ mit einer höheren Wischfrequenz als der erste Geschwindigkeitsmodus F₁ ansteuerbar; der Heckscheibenwischer ist in einem Intervallmodus H_{Int} und in einzelnen Wischvorgängen H_{Einzel} ansteuerbar.

Das Steuergerät 10 ist weiterhin mit einem Regensensor 16 verbunden, um in bekannter Weise die Benetzung der Frontscheibe oder allgemein einen Regenzustand zu erfassen. Ferner ist ein Sensor 18 zum Erfassen eines eingelegten Rückwärtsgangs sowie ein Geschwindigkeitssenor 20 zur Erfassung der Fahrzeuggeschwindigkeit vorgesehen. Der Rückwärtsfahrbetrieb des Kraftfahrzeugs kann zum Beispiel dadurch erfasst werden, dass das Einlegen des Rückwärtsgangs durch den Sensor 18 erfasst wird. Alternativ kann der Rückwärtsfahrbetrieb des Kraftfahrzeugs erfasst werden, indem die durch den Geschwindigkeitssensor 20 erfasste Fahrzeuggeschwindigkeit bei durch den Sensor 18 erfasstem eingelegtem Rückwärtsgang einen vorgegebenen unteren Grenzwert von wenigen km/h überschreitet.

Das Steuergerät 10 ist ferner mit einem ersten Timer 22 zum Erfassen der Zeit t_{F} seit dem letzten Wischzyklus des Frontscheibenwischers 12 sowie einem zweiten Timer 24 zum Erfassen der Zeit t_{H} seit dem letzten Wischzyklus des Heckscheibenwischers 14 versehen.

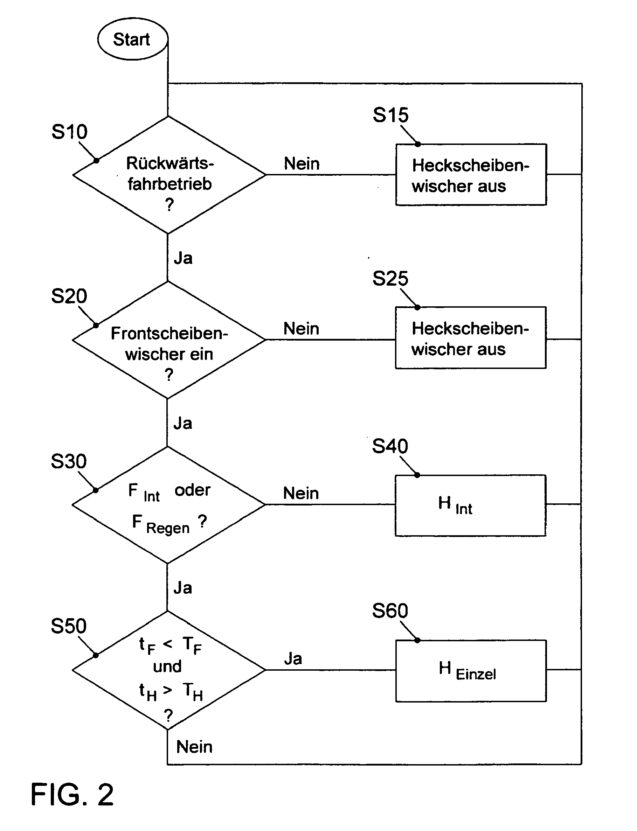

Es wird nun anhand des Flussdiagramms von Fig. 2 die Funktionsweise der in Fig. 1 dargestellten Kraftfahrzeug-Wischanlage näher erläutert.

Als erstes erfolgt nach dem Starten des Kraftfahrzeugs in Schritt S5 ein Initialisierungsvorgang. In diesem Initialisierungsvorgang wird insbesondere der Wert für die Zeit t_{F} seit dem letzten Wischzyklus des Frontscheibenwischers 12 auf Null zurück gesetzt, und der Wert für die Zeit t_{H} seit dem letzten Wischzyklus des Heckscheibenwischers 14 wird auf einen Wert größer als ein zweiter vorgegebener Grenzwert T_{H} gesetzt. Außerdem werden vorzugsweise der Heckscheibenwischer 14 und der Frontscheibenwischer 12 ausgeschaltet, um auszuschließen, dass die entsprechenden Wischerblätter unbeabsichtigt durch ein Wischen über eine vereiste oder trockene Scheibe beschädigt werden.

Dann wird in Schritt S10 in der oben angegebenen Weise mittels der Sensoren 18 und 20 bestimmt, ob sich das Kraftfahrzeug in einem Rückwärtsfahrbetrieb befindet. Falls in Schritt S10 ein Rückwärtsfahrbetrieb erkannt wird, geht der Steuervorgang weiter zu Schritt S20, ansonsten bleibt in Schritt S15 der Heckscheibenwischer 14 ausgeschaltet bzw. in einem während des Vorwärtsfahrbetriebs bewusst eingeschalteten Intervallbetrieb H_{Int}, bevor der Steuervorgang wieder zu Schritt S10 zurück geht. In Schritt S20 wird erfasst, ob der Frontscheibenwischer 12 in irgendeinem der möglichen Betriebsmodi eingeschaltet ist. Falls der Frontscheibenwischer 12 nicht eingeschaltet ist, wird in Schritt S25 der Heckscheibenwischer 14 ausgeschaltet bzw. bleibt ausgeschaltet, und der Steuervorgang geht wieder zurück zu Schritt S10, da davon auszugehen ist, dass keine Benetzung der Kraftfahrzeugscheiben durch Regen vorliegt.

Als nächstes wird in Schritt S30 erfasst, ob sich der Frontscheibenwischer 12 im Intervallmodus F_{Int} oder im Regensensormodus F_{Regen} befindet. Falls nicht, d.h. wenn der Frontscheibenwischer 12 im ersten Geschwindigkeitsmodus F₁ oder im zweiten Geschwindigkeitsmodus F₂ betrieben wird, wird der Heckscheibenwischer 14 in Schritt S40 im Intervallmodus H_{Int} betrieben. Anschließend geht die Steuerroutine wieder zurück zu Schritt S10, um gegebenenfalls den Heckscheibenwischer 14 in Schritt S15 bei Beendigung des Rückwärtsfahrbetriebs wieder auszuschalten.

Falls in Schritt S30 bestimmt worden ist, dass der Frontscheibenwischer 12 im Intervallmodus F_{Int} oder im Regensensormodus F_{Regen} angesteuert wird, wird in Schritt S50 überprüft, ob die Zeit t_{F} seit dem letzten Wischzyklus des Frontscheibenwischers 12 kleiner als ein erster vorgegebener Grenzwert T_{F} ist und gleichzeitig die Zeit t_{H} seit dem letzten Wischzyklus des Heckscheibenwischers 14 größer als ein zweiter vorgegebener Grenzwert T_{H} ist, d.h. die beiden Bedingungen t_{F}<T_{F} und t_{H}>T_{H} erfüllt sind. Falls diese beiden Bedingungen erfüllt sind, wird angenommen, dass die Heckscheibe mit Regentropfen benetzt ist, und der Heckscheibenwischer 14 wird in Schritt S60 zur Durchführung eines einzelnen Wischzyklus H_{Einzel} angesteuert. Anschließend geht der Steuervorgang wieder zurück zu Schritt S10, um zu ermitteln, ob sich das Kraftfahrzeug weiter im Rückwärtsfahrbetrieb befindet.

Falls jedoch in Schritt S50 bestimmt wird, dass eine der beiden obigen Bedingungen nicht erfüllt ist, ist davon auszugehen, dass die Heckscheibe trocken ist. Um zu verhindern, dass der Heckscheibenwischer 14 über die trockene Heckscheibe wischt, bleibt der Heckscheibenwischer 14 ausgeschaltet. Der Steuervorgang kehrt zurück zu Schritt S10. Der erste vorgegebene Grenzwert T_{F} für die Zeit seit dem letzten Wischzyklus des Frontscheibenwischers 12 wird beispielsweise auf 30 Sekunden eingestellt, was einer typischen Zeitdauer zwischen zwei Wischzyklen des Frontscheibenwischers 12 in einem Intervallmodus F_{Int} entspricht. Der zweite vorgegebene Grenzwert T_{H} für die Zeit seit dem letzten Wischzyklus des Heckscheibenwischers wird vorzugsweise niedriger als der erste vorgegebene Grenzwert T_{F} eingestellt, und beträgt beispielsweise 15 Sekunden. Die exakten Zeitwerte für den ersten und den zweiten vorgegebenen Grenzwert T_{F}, T_{H} werden entsprechend dem Fahrzeugtyp unter Berücksichtigung insbesondere der Heckscheibenkonstruktion angepasst.

Mit dem oben beschriebenen Verfahren wird gewährleistet, dass die Heckscheibe bei einem Rückwärtsfahrbetrieb des Kraftfahrzeugs automatisch durch den Heckscheibenwischer 14 angemessen gereinigt wird. Andererseits wird vermieden, dass der Heckscheibenwischer 14 über eine trockene Heckscheibe wischt. Eine trockene Heckscheibe wird angenommen, falls die Heckscheibe gerade gewischt worden ist bzw. der letzte Wischzyklus des Heckscheibenwischers 14 noch nicht lange zurückliegt, d.h. falls die Zeit t_{H} seit dem letzten Wischzyklus des Heckscheibenwischers 14 noch nicht größer als der zweite vorgegebene Grenzwert T_{H} ist, und falls die Zeit t_{F} seit dem letzten Wischzyklus des Frontscheibenwischers 12 beispielsweise aufgrund eines nicht vorhandenen Regenzustandes bereits länger zurückliegt, d.h. die Zeit t_{F} seit dem letzten Wischzyklus des Frontscheibenwischers 12 größer als der erste vorgegebene Grenzwert T_{F} ist.

Die Ansteuerung des Frontscheibenwischers 12 ist im Rahmen dieser Erfindung grundsätzlich beliebig und insbesondere unabhängig von der oben beschriebenen Ansteuerung des Heckscheibenwischers 14 gemäß der Erfindung.

### BEZUGSZEICHENLISTE

- 10: Steuergerät
- 12: Frontscheibenwischer
- 14: Heckscheibenwischer
- 16: Regensensor
- 18: Rückwärtsgangsensor
- 20: Geschwindigkeitssensor
- 22: erster Timer
- 24: zweiter Timer

## Patentansprüche

1. Vorrichtung zur Steuerung einer Wischanlage eines Kraftfahrzeugs mit einem Frontscheibenwischer (12) und einem Heckscheibenwischer (14), wobei die Vorrichtung mit einer Einrichtung (18, 20) zum Erfassen eines Rückwärtsfahrbetriebs des Kraftfahrzeugs versehen ist,
wobei der Frontscheibenwischer (12) in einem Intervallmodus (F_{Int}) und/oder einem Regensensormodus (F_{Regen}) sowie in wenigstens einem Geschwindigkeitsmodus (F₁, F₂) ansteuerbar ist und
wobei die Vorrichtung den Heckscheibenwischer (14) derart ansteuert, dass bei Erfassung eines Rückwärtsfahrbetriebs des Kraftfahrzeugs ein Wischzyklus des Heckscheibenwischers (14) erfolgt, wenn einerseits grundsätzlich von einer Benetzung der Kratffahrzeugscheiben durch Regen auszugehen ist und andererseits von einer nicht mehr trockenen Heckscheibe auszugehen ist,
**dadurch gekennzeichnet,**
**dass** ein einzelner Wischzyklus (H_{Einzel}) des Heckscheibenwischers (14) nur durchgeführt wird, wenn der Frontscheibenwischer (12) im Intervallmodus (F_{Int}) oder im Regensensormodus (F_{Regen}) betrieben wird, und die Ansteuerung des Heckscheibenwischers (14) in einem Intervallmodus (H_{Int}) erfolgt, wenn der Frontscheibenwischer (12) im Geschwindigkeitsmodus (F₁, F₂) betrieben wird.

2. Vorrichtung nach Anspruch 1,
**dadurch gekennzeichnet,**
**dass** die Vorrichtung mit einem ersten Timer (22) zum Erfassen der Zeit (t_{F}) seit dem letzten Wischzyklus des Frontscheibenwischers (12) versehen ist, und
**dass** eine grundsätzliche Benetzung der Kraftfahrzeugscheiben erkannt wird, wenn die Zeit (t_{F}) seit dem letzten Wischzyklus des Frontscheibenwischers (12) kleiner als ein erster vorgegebener Grenzwert (T_{F}) ist.

3. Vorrichtung nach Anspruch 2,
**dadurch gekennzeichnet,**
**dass** die Zeit (t_{F}) seit dem letzten Wischzyklus des Frontscheibenwischers (12) beim Starten des Kraftfahrzeugs auf Null zurück gesetzt wird.

4. Vorrichtung nach einem der Ansprüche 1 bis 3,
**dadurch gekennzeichnet,**
**dass** die Vorrichtung mit einem zweiten Timer (24) zum Erfassen der Zeit (t_{H}) seit dem letzten Wischzyklus des Heckscheibenwischers (14) versehen ist, und
**dass** eine nicht mehr trockene Heckscheibe erkannt wird, wenn die Zeit (t_{H}) seit dem letzten Wischzyklus des Heckscheibenwischers (14) größer als ein zweiter vorgegebener Grenzwert (T_{H}) ist.

5. Vorrichtung nach Anspruch 4,
**dadurch gekennzeichnet,**
**dass** die Zeit (t_{H}) seit dem letzten Wischzyklus des Heckscheibenwischers (14) beim Starten des Kraftfahrzeugs auf einen Wert größer als der zweite vorgegebene Grenzwert (T_{H}) gesetzt wird.

6. Vorrichtung nach einem der Ansprüche 2 bis 5,
**dadurch gekennzeichnet,**
**dass** der erste vorgegebene Grenzwert (T_{F}) der Zeitdauer zwischen zwei Wischzyklen des Frontscheibenwischers (12) in einem Intervallmodus (F_{Int}) entspricht.

7. Vorrichtung nach einem der Ansprüche 4 bis 6,
**dadurch gekennzeichnet,**
**dass** der zweite vorgegebene Grenzwert (T_{H}) kleiner als der erste vorgegebene Grenzwert (T_{F}) gewählt ist.

8. Vorrichtung nach einem der Ansprüche 2 bis 7,
**dadurch gekennzeichnet,**
**dass** der erste vorgegebene Grenzwert (T_{F}) 30 Sekunden beträgt und/oder der zweite vorgegeben Grenzwert (T_{H}) 15 Sekunden beträgt.

9. Vorrichtung nach einem der Ansprüche 1 bis 8,
**dadurch gekennzeichnet,**
**dass** die Einrichtung (18, 20) zum Erfassen des Rückwärtsfahrbetriebs des Kraftfahrzeugs eine Vorrichtung (18) zum Erfassen des Einlegens des Rückwärtsgangs des Kraftfahrzeugs aufweist.

10. Vorrichtung nach einem der Ansprüche 1 bis 8,
**dadurch gekennzeichnet,**
**dass** die Einrichtung (18, 20) zum Erfassen des Rückwärtsfahrbetriebs des Kraftfahrzeugs eine Vorrichtung (18) zum Erfassen eines eingelegten Rückwärtsgangs und eine Vorrichtung (20) zum Erfassen der Geschwindigkeit des Kraftfahrzeugs aufweist.

11. Verfahren zur Steuerung einer Wischanlage eines Kraftfahrzeugs mit einem Frontscheibenwischer (12) und einem Heckscheibenwischer (14), wobei der Frontscheibenwischer (12) in einem Intervallmodus (F_{Int}) und/oder einem Regensensormodus (F_{Regen}) sowie in wenigstens einem Geschwindigkeitsmodus (F₁, F₂) ansteuerbar ist, wobei das Verfahren den Schritt des Erfassens eines Rückwärtsfahrbetriebs des Kraftfahrzeugs (S10) umfasst und wobei bei erfasstem Rückwärtsfahrbetrieb des Kraftfahrzeugs (S10) ein Wischzyklus des Heckscheibenwischers (14) erfolgt (S60), wenn einerseits grundsätzlich von einer Benetzung der Kratffahrzeugscheiben durch Regen auszugehen ist und andererseits von einer nicht mehr trockenen Heckscheibe auszugehen ist,
**dadurch gekennzeichnet,**
**dass** ein einzelner Wischzyklus (H_{Einzel}) des Heckscheibenwischers (14) nur erfolgt, wenn der Frontscheibenwischer (12) im Intervallmodus (F_{Int}) oder im Regensensormodus (F_{Regen}) betrieben wird, und die Ansteuerung des Heckscheibenwischers (14) in einem Intervallmodus (H_{Int}) erfolgt, wenn der Frontscheibenwischer (12) im Geschwindigkeitsmodus (F₁, F₂) betrieben wird.

12. Verfahren nach Anspruch 11,
**dadurch gekennzeichnet,**
**dass** die Zeit (t_{F}) seit dem letzten Wischzyklus des Frontscheibenwischers (12) erfasst wird, und
**dass** eine grundsätzliche Benetzung der Kraftfahrzeugscheiben erkannt wird, wenn die Zeit (t_{F}) seit dem letzten Wischzyklus des Frontscheibenwischers (12) kleiner als ein erster vorgegebener Grenzwert (T_{F}) ist.

13. Verfahren nach Anspruch 12,
**dadurch gekennzeichnet,**
**dass** die Zeit (t_{F}) seit dem letzten Wischzyklus des Frontscheibenwischers (12) beim Starten des Kraftfahrzeugs auf Null zurück gesetzt wird (S5).

14. Verfahren nach einem der Ansprüche 11 bis 13,
**dadurch gekennzeichnet,**
**dass** die Zeit (t_{H}) seit dem letzten Wischzyklus des Heckscheibenwischers (14) erfasst wird, und
**dass** eine nicht mehr trockene Heckscheibe erkannt wird, wenn die Zeit (t_{H}) seit dem letzten Wischzyklus des Heckscheibenwischers (14) größer als ein zweiter vorgegebener Grenzwert (T_{H}) ist.

15. Verfahren nach Anspruch 14,
**dadurch gekennzeichnet,**
**dass** die Zeit (t_{H}) seit dem letzten Wischzyklus des Heckscheibenwischers (14) beim Starten des Kraftfahrzeugs auf einen Wert größer als der zweite vorgegebene Grenzwert (T_{H}) gesetzt wird (S5).

16. Verfahren nach einem der Ansprüche 12 bis 15,
**dadurch gekennzeichnet,**
**dass** der erste vorgegebene Grenzwert (T_{F}) der Zeitdauer zwischen zwei Wischzyklen des Frontscheibenwischers (12) in einem Intervallmodus (F_{Int}) entspricht.

17. Verfahren nach einem der Ansprüche 14 bis 16,
**dadurch gekennzeichnet,**
**dass** der zweite vorgegebene Grenzwert (T_{H}) kleiner als der erste vorgegebene Grenzwert (T_{F}) gewählt ist.

18. Verfahren nach einem der Ansprüche 14 bis 17,
**dadurch gekennzeichnet,**
**dass** der erste vorgegebene Grenzwert (T_{F}) 30 Sekunden beträgt und/oder der zweite vorgegeben Grenzwert (T_{H}) 15 Sekunden beträgt.

19. Verfahren nach einem der Ansprüche 11 bis 18,
**dadurch gekennzeichnet,**
**dass** der Rückwärtsfahrbetrieb des Kraftfahrzeugs durch das Erfassen des Einlegens des Rückwärtsgangs des Kraftfahrzeugs erfasst wird.

20. Verfahren nach einem der Ansprüche 11 bis 18,
**dadurch gekennzeichnet,**
**dass** der Rückwärtsfahrbetrieb des Kraftfahrzeugs durch das Erfassen eines eingelegten Rückwärtsgangs und einer Geschwindigkeit des Kraftfahrzeugs erfasst wird.

## Claims

1. Apparatus for controlling a wiper arrangement of a motor vehicle, having a front windscreen wiper (12) and a rear windscreen wiper (14), wherein the apparatus is provided with a device (18, 20) for sensing a reverse travel mode of the motor vehicle,
wherein the front windscreen wiper (12) can be actuated in an intermittent mode (Fᵢₙₜ) and/or a rain sensor mode (Fᵣₐᵢₙ) as well as in at least one speed mode (F₁, F₂), and
wherein the apparatus actuates the rear windscreen wiper (14) in such a way that when a reverse travel mode of the motor vehicle is sensed, a wiping cycle of the rear windscreen wiper (14) takes place if, on the one hand, it can basically be assumed that the motor vehicle windows are being wetted by rain and, on the other hand, it can be assumed that a rear windscreen is no longer dry,
**characterized**
**in that** an individual wiping cycle (H_{individual}) of the rear windscreen wiper (14) is carried out only if the front windscreen wiper (12) is being operated in the intermittent mode (Fᵢₙₜ) or in the rain sensor mode (Fᵣₐᵢₙ), and the actuation of the rear windscreen wiper (14) takes place in an intermittent mode (Hᵢₙₜ) if the front windscreen wiper (12) is being operated in the speed mode (F₁, F₂).

2. Apparatus according to Claim 1,
**characterized**
**in that** the apparatus is provided with a first timer (22) for determining the time (t_{F}) since the last wiping cycle of the front windscreen wiper (12), and
**in that** basic wetting of the motor vehicle windows is detected if the time (t_{F}) since the last wiping cycle of the front windscreen wiper (12) is shorter than a first predefined limiting time (T_{F}).

3. Apparatus according to Claim 2,
**characterized**
**in that** the time (t_{F}) since the last wiping cycle of the front windscreen wiper (12) is reset to zero when the motor vehicle starts.

4. Apparatus according to one of Claims 1 to 3,
**characterized**
**in that** the apparatus is provided with a second timer (24) for determining the time (t_{H}) since the last wiping cycle of the rear windscreen wiper (14), and
**in that** a rear windscreen which is no longer dry is detected if the time (t_{H}) since the last wiping cycle of the rear windscreen wiper (14) is longer than a second predefined limiting time (T_{H}).

5. Apparatus according to Claim 4,
**characterized**
**in that** the time (t_{H}) since the last wiping cycle of the rear windscreen wiper (14) is set to a value higher than the second predefined limiting value (T_{H}) when the motor vehicle starts.

6. Apparatus according to one of Claims 2 to 5,
**characterized**
**in that** the first predefined limiting value (T_{F}) corresponds to the time period between two wiping cycles of the front windscreen wiper (12) in an intermittent mode (Fᵢₙₜ).

7. Apparatus according to one of Claims 4 to 6,
**characterized**
**in that** the second predefined limiting value (T_{H}) is selected to be lower than the first predefined limiting value (T_{F}).

8. Apparatus according to one of Claims 2 to 7,
**characterized**
**in that** the first predefined limiting value (T_{F}) is 30 seconds and/or the second predefined limiting value (T_{H}) is 15 seconds.

9. Apparatus according to one of Claims 1 to 8,
**characterized**
**in that** the device (18, 20) for sensing the reverse travel mode of the motor vehicle has an apparatus (18) for sensing the engagement of the reverse gearspeed of the motor vehicle.

10. Apparatus according to one of Claims 1 to 8,
**characterized**
**in that** the device (18, 20) for sensing the reverse travel mode of the motor vehicle has an apparatus (18) for sensing the engaged rear gearspeed and an apparatus (20) for sensing the speed of the motor vehicle.

11. Method for controlling a wiper arrangement of a motor vehicle, having a front windscreen wiper (12) and a rear windscreen wiper (14), wherein the front windscreen wiper (12) can be actuated in an intermittent mode (Fᵢₙₜ) and/or a rain sensor mode (Fᵣₐᵢₙ) as well as in at least one speed mode (F₁, F₂), wherein the method comprises the step of sensing a reverse travel mode of the motor vehicle (S10), and wherein when a reverse travel mode of the motor vehicle (S10) is sensed, a wiping cycle of the rear windscreen wiper (14) takes place (S60) if, on the one hand, it can basically be assumed that the motor vehicle windows are being wetted by rain and, on the other hand, it can be assumed that a rear windscreen is no longer dry,
**characterized**
**in that** an individual wiping cycle (H_{individual}) of the rear windscreen wiper (14) is carried out only if the front windscreen wiper (12) is being operated in the intermittent mode (Fᵢₙₜ) or in the rain sensor mode (Fᵣₐᵢₙ), and the actuation of the rear windscreen wiper (14) takes place in an intermittent mode (Hᵢₙₜ) if the front windscreen wiper (12) is being operated in the speed mode (F₁, F₂).

12. Method according to Claim 11,
**characterized**
**in that** the time (t_{F}) since the last wiping cycle of the front windscreen wiper (12) is determined, and
**in that** basic wetting of the motor vehicle windows is detected if the time (t_{F}) since the last wiping cycle of the front windscreen wiper (12) is shorter than a first predefined limiting value (T_{F}).

13. Method according to Claim 12,
**characterized**
**in that** the time (t_{F}) since the last wiping cycle of the front windscreen wiper (12) is reset to zero (S5) when the motor vehicle starts.

14. Method according to one of Claims 11 to 13,
**characterized**
**in that** the time (t_{H}) since the last wiping cycle of the rear windscreen wiper (14) is determined, and
**in that** a rear windscreen which is no longer dry is detected if the time (t_{H}) since the last wiping cycle of the rear windscreen wiper (14) is longer than a second predefined limiting value (T_{H}).

15. Method according to Claim 14,
**characterized**
**in that** the time (t_{H}) since the last wiping cycle of the rear windscreen wiper (14) is set (S5) to a value higher than the second predefined limiting value (T_{H}) when the motor vehicle starts.

16. Method according to one of Claims 12 to 15,
**characterized**
**in that** the first predefined limiting value (T_{F}) corresponds to the time period between two wiping cycles of the front windscreen wiper (12) in an intermittent mode (Fᵢₙₜ).

17. Method according to one of Claims 14 to 16,
**characterized**
**in that** the second predefined limiting value (T_{H}) is selected to be lower than the first predefined limiting value (T_{F}).

18. Method according to one of Claims 14 to 17,
**characterized**
**in that** the first predefined limiting value (T_{F}) is 30 seconds and/or the second predefined limiting value (T_{H}) is 15 seconds.

19. Method according to one of Claims 11 to 18,
**characterized**
**in that** the reverse travel mode of the motor vehicle is sensed by sensing the engagement of the reverse gearspeed of the motor vehicle.

20. Method according to one of Claims 11 to 18,
**characterized**
**in that** the reverse travel mode of the motor vehicle is sensed by sensing an engaged reverse gearspeed and a speed of the motor vehicle.

## Revendications

1. Dispositif de commande d'un dispositif d'essuyage d'un véhicule automobile avec un essuie-glace avant (12) et un essuie-glace arrière (14), le dispositif étant pourvu d'un dispositif (18, 20) de détection d'un fonctionnement en marche arrière du véhicule automobile ;
l'essuie-glace avant (12) pouvant être commandé dans un mode intermittent (Fᵢₙₜ) et/ou dans un mode de capteur de pluie (F_{Regen}) ainsi que dans au moins un mode de vitesse (F₁, F₂) ; et
le dispositif commandant l'essuie-glace arrière (14) de telle sorte qu'en cas de détection d'un fonctionnement en marche arrière du véhicule automobile, un cycle d'essuyage de l'essuie-glace arrière (14) est lancé d'une part sur le principe d'un mouillage des vitres du véhicule automobile par la pluie et d'autre part sur le principe d'une vitre arrière qui n'est plus mouillée ;
**caractérisé en ce que** :
seul un cycle d'essuyage (H_{Einzel}) de l'essuie-glace arrière (14) est réalisé lorsque l'essuie-glace avant (12) est entraîné en mode intermittent (Fᵢₙₜ) ou en mode de capteur de pluie (F_{Regen}) et **en ce que** le pilotage de l'essuie-glace arrière (14) se produit dans un mode intermittent (Hᵢₙₜ) lorsque l'essuie-glace avant (12) est entraîné en mode de vitesse (F₁, F₂).

2. Dispositif selon la revendication 1, **caractérisé en ce que** le dispositif est pourvu d'un premier minuteur (22) de détection du temps (t_{F}) écoulé depuis le dernier cycle d'essuyage de l'essuie-glace avant (12) et qu'un mouillage fondamental des vitres du véhicule automobile est reconnu lorsque le temps (t_{F}) écoulé depuis le dernier cycle d'essuyage de l'essuie-glace avant (12) est inférieur à une première valeur limite (T_{F}) préalablement prévue.

3. Dispositif selon la revendication 2, **caractérisé en ce que** le temps (t_{F}) écoulé depuis le dernier cycle d'essuyage de l'essuie-glace avant (12) est remis à zéro à chaque redémarrage du véhicule automobile.

4. Dispositif selon l'une quelconque des revendications 1 à 3, **caractérisé en ce que** le dispositif est pourvu d'un deuxième minuteur (24) de détection du temps (t_{H}) écoulé depuis le dernier cycle d'essuyage de l'essuie-glace arrière (14) et qu'une vitre arrière est reconnue comme n'étant plus mouillée lorsque le temps (t_{H}) écoulé depuis le dernier cycle d'essuyage de l'essuie-glace arrière (14) est supérieur à une deuxième valeur limite (T_{H}) préalablement prévue.

5. Dispositif selon la revendication 4, **caractérisé en ce que** le temps (t_{H}) écoulé depuis le dernier cycle d'essuyage de l'essuie-glace arrière (14) lors du démarrage du véhicule automobile est placé sur une valeur supérieure à la deuxième valeur limite (T_{H}) préalablement prévue.

6. Dispositif selon l'une quelconque des revendications 2 à 5, **caractérisé en ce que** la première valeur limite (T_{F}) préalablement prévue du temps écoulé entre deux cycles d'essuyage de l'essuie-glace avant (12) correspond à un mode intermittent (Fᵢₙₜ).

7. Dispositif selon l'une quelconque des revendications 4 à 6, **caractérisé en ce que** la deuxième valeur limite (T_{H}) préalablement prévue est choisie pour être inférieure à la première valeur limite (T_{F}) préalablement prévue.

8. Dispositif selon l'une quelconque des revendications 2 à 7, **caractérisé en ce que** la première valeur limite (T_{F}) préalablement prévue est de 30 secondes et/ou que la deuxième valeur limite (T_{H}) prédéfinie est de 15 secondes.

9. Dispositif selon l'une quelconque des revendications 1 à 8, **caractérisé en ce que** le dispositif (18, 20) de détection du fonctionnement en marche arrière du véhicule automobile comporte un dispositif (18) de détection d'enclenchement de la marche arrière du véhicule automobile.

10. Dispositif selon l'une quelconque des revendications 1 à 8, **caractérisé en ce que** le dispositif (18, 20) de détection du fonctionnement en marche arrière du véhicule automobile comporte un dispositif (18) de détection d'un rapport de marche arrière enclenché et un dispositif (20) de détection de vitesse du véhicule automobile.

11. Procédé de commande d'un dispositif d'essuyage d'un véhicule automobile avec un essuie-glace avant (12) et un essuie-glace arrière (14), l'essuie-glace avant (12) pouvant être commandé dans un mode intermittent (Fᵢₙₜ) et/ou dans un mode de capteur de pluie (F_{Regen}) ainsi que dans au moins un mode de vitesse (F₁, F₂), le procédé comprenant l'étape de détection d'un fonctionnement en marche arrière du véhicule automobile (S10) et en cas de détection d'un fonctionnement en marche arrière du véhicule automobile (S10), un cycle d'essuyage de l'essuie-glace arrière (14) étant lancé (S60), lorsque l'on observe d'une part un mouillage des vitres du véhicule automobile par la pluie et d'autre part le manque d'humidité sur la vitre arrière, **caractérisé en ce que** seul un cycle d'essuyage (H_{Einzel}) de l'essuie-glace arrière (14) se produit lorsque l'essuie-glace avant (12) est entraîné en mode intermittent (Fᵢₙₜ) ou en mode de capteur de pluie (F_{Regen}) et que le pilotage de l'essuie-glace arrière (14) se produit en mode intermittent (Hᵢₙₜ) lorsque l'essuie-glace avant (12) est entraîné en mode de vitesse (F₁, F₂).

12. Procédé selon la revendication 11, **caractérisé en ce que** le temps (t_{F}) écoulé depuis le dernier cycle d'essuyage de l'essuie-glace avant (12) est détecté et qu'un mouillage fondamental des vitres du véhicule automobile est détecté lorsque le temps (t_{F}) écoulé depuis le dernier cycle d'essuyage de l'essuie-glace avant (12) est inférieur à une première valeur limite (T_{F}) préalablement prévue.

13. Procédé selon la revendication 12, **caractérisé en ce que** le temps (t_{F}) écoulé depuis le dernier cycle d'essuyage de l'essuie-glace avant (12) est remis à zéro au démarrage du véhicule automobile (S5).

14. Procédé selon l'une quelconque des revendications 11 à 13, **caractérisé en ce que** le temps (t_{H}) écoulé depuis le dernier cycle d'essuyage de l'essuie-glace arrière (14) est déterminé et qu'une vitre arrière est reconnue comme n'étant plus sèche lorsque le temps (t_{H}) écoulé depuis le dernier cycle d'essuyage de l'essuie-glace arrière (14) est supérieur à une deuxième valeur limite (T_{H}) préalablement prévue.

15. Procédé selon la revendication 14, **caractérisé en ce que** le temps (t_{H}) écoulé depuis le dernier cycle d'essuyage de l'essuie-glace arrière (14) est replacé à une valeur supérieure à la deuxième valeur limite (T_{H}) préalablement prévue lors du démarrage du véhicule automobile (S5).

16. Procédé selon l'une quelconque des revendications 12 à 15, **caractérisé en ce que** la première valeur limite (T_{F}) préalablement prévue de la durée prévue entre deux cycles d'essuyage de l'essuie-glace avant (12) correspond à un mode intermittent (Fᵢₙₜ).

17. Procédé selon l'une quelconque des revendications 14 à 16, **caractérisé en ce que** la deuxième valeur limite (T_{H}) préalablement prévue est choisie pour être inférieure à la première valeur limite (T_{F}) préalablement prévue.

18. Procédé selon l'une quelconque des revendications 14 à 17, **caractérisé en ce que** la première valeur limite (T_{F}) préalablement prévue est de 30 secondes et/ou que la deuxième valeur limite (T_{H}) prédéfinie est de 15 secondes.

19. Procédé selon l'une quelconque des revendications 11 à 18, **caractérisé en ce que** le fonctionnement en marche arrière du véhicule automobile est détecté par détection de l'enclenchement de la marche arrière du véhicule automobile.

20. Procédé selon l'une quelconque des revendications 11 à 18, **caractérisé en ce que** le fonctionnement en marche arrière du véhicule automobile est détecté par la détection du rapport de marche arrière enclenché et d'une vitesse du véhicule automobile.
